# EUROPEAN PATENT SPECIFICATION

(11) **EP 2 347 945 B1**
(45) Date of publication and mention of the grant of the patent: **31.12.2014**
(21) Application number: 11150800.8
(22) Date of filing: 13.01.2011
(51) Int. Cl.: B62D 5/093, B63H 25/16

(54) **A marine steering system comprising a parallel angle sensor-controlled actuator**
Schiffssteuersystem umfassend einen parallelen, winkelsensorgesteuerten Aktuator
Système de direction naval comprenant un actionneur parallèle commandé par un capteur d'angle

(30) Priority: 22.01.2010 NL 2004129
(43) Date of publication of application: 27.07.2011
(73) Proprietor: De Wetterwille Beheer B.V., 9207 BL Drachten (NL)
(72) Inventor: Attema, Cornelis, 9207 BL, Drachten (NL)
(74) Representative: Klavers, Cornelis

(56) References cited:
- EP-A2- 0 102 579
- EP-A2- 1 894 814
- WO-A1-2005/123486
- DE-A1-102004 021 531
- US-A- 5 146 745

## Description

The present invention relates to a marine steering system in accordance with the preamble of claim 1.

Such a marine steering system for vessels is known from EP-0102579 A2, which is used to delimit claim 1 there from. The known steering system comprises a marine steering system for a vessel, comprising a turnable steering wheel, a steering element operable by steering means embodied as hydraulic steering means, and an actuator hydraulically connected to the steering wheel, which transmits information from the steering wheel (2) to the steering means, angular displacement means connected to the steering wheel for determining angle-related information, a parallel actuator connected to the aforesaid angular displacement means and the steering means, and having a hydraulic part for connection to the hydraulic steering means and an electric part provided with dotted lines, and switching means designed to disconnect the hydraulic connection to the steering wheel when the parallel actuator becomes operative, and designed to cause the steering wheel to run free from the actuator upon being activated. In particular the known steering system has a response transmitter, which is hard-wired to the steering element or rudder for sensing and feeding actual rudder angle related information back to a comparator, whereto also set or wanted angle related information from the actuator pump is provided. The comparator adapts the actuator by means of a difference signal, such that the actual rudder angle is controlled, thus minimizing the difference signal to the actuator.

DE-102004021531 discloses a similar feedback marine steering system for a vessel.

The object of the invention is to provide an improved steering system, wherein the operation of the steering wheel requires even less force, and which provides possibilities of extending the system with additional controls, using simple means.

In order to accomplish that object, the steering system according to the invention has the characterising features of claim 1.

The advantage of the steering system according to the invention is that they make for very light steering, since the hydraulic connection is rendered inoperative, or the hydraulic connection is disconnected, when the parallel actuator becomes operative. By substituting the connection for a contactless sensor, the angular position of the already freewheeling steering wheel is additionally measured in a contactless manner, i.e. without counter forces other than the natural friction on the steering wheel.

Advantageous is also the fact that the steering system according to the invention is a double system, since it comprises two parallel branches which, in certain conditions, operate separately from each other. This means that if one system branch does not function properly, there is always another system branch which can function as a spare branch, which is conducive to achieving a reliable operation of the system according to the invention.

Furthermore advantageous is that fact that the movement or addition of one or more additional controls or remote controls can be realised in a simple manner by extending or electrically branching the respective electric line to the contactless angular displacement measuring means. This is simpler and much less comprehensive than the previously required interrupting and re-routing of voluminous, heavy lines and connections which, in addition, have to meet stringent tightness requirements.

One embodiment of the steering system according to the invention is characterised in that the switching means are further designed to effect the hydraulic connection to the steering wheel in case of a malfunction in the parallel actuator.

The advantage of the embodiment according to the invention is that the level of reliability is enhanced in that in case of a calamity which causes the parallel actuator to function inadequately, the original actuator will nevertheless remain directly available for emergency steering at all times through suitable switching of the switching means, which is a very important safety feature. If no further measures are taken, such as the activation of a spare parallel actuator, steering will then be laboriously effected by means of a classic hand-operated hydraulic pump steering system.

The other embodiments and their concomitant advantages will be elucidated in the description below. Now in particular the steering system according to the present invention will be explained in more detail with reference to the figures below, in which like parts are indicated by the same numerals. In the drawing:
Figure 1 schematically shows a circuit diagram of a possible embodiment of the steering system according to the invention; and
Figure 2 schematically shows a circuit diagram of another possible embodiment of the steering system according to the invention.

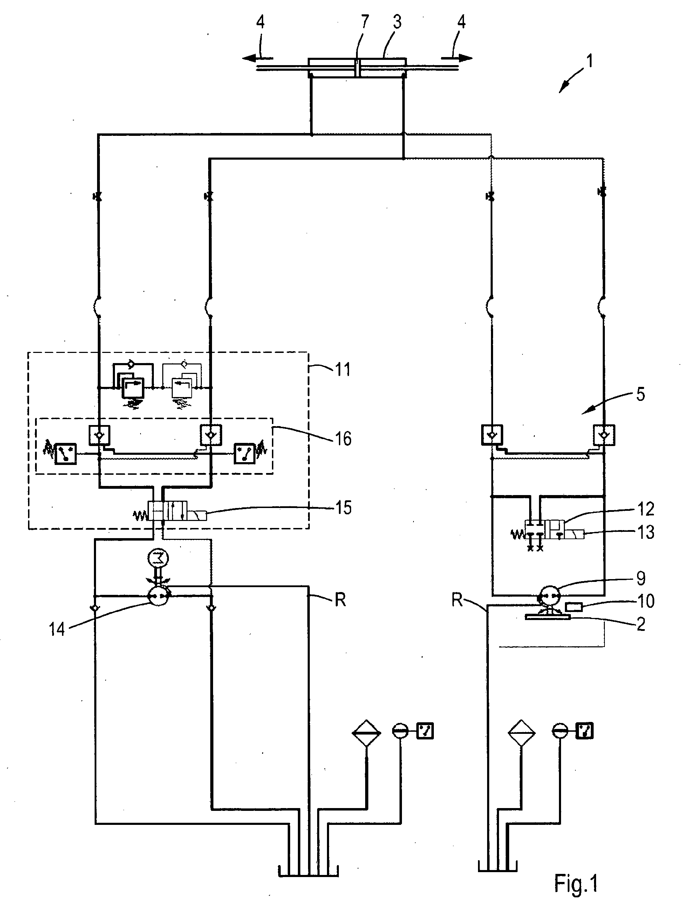

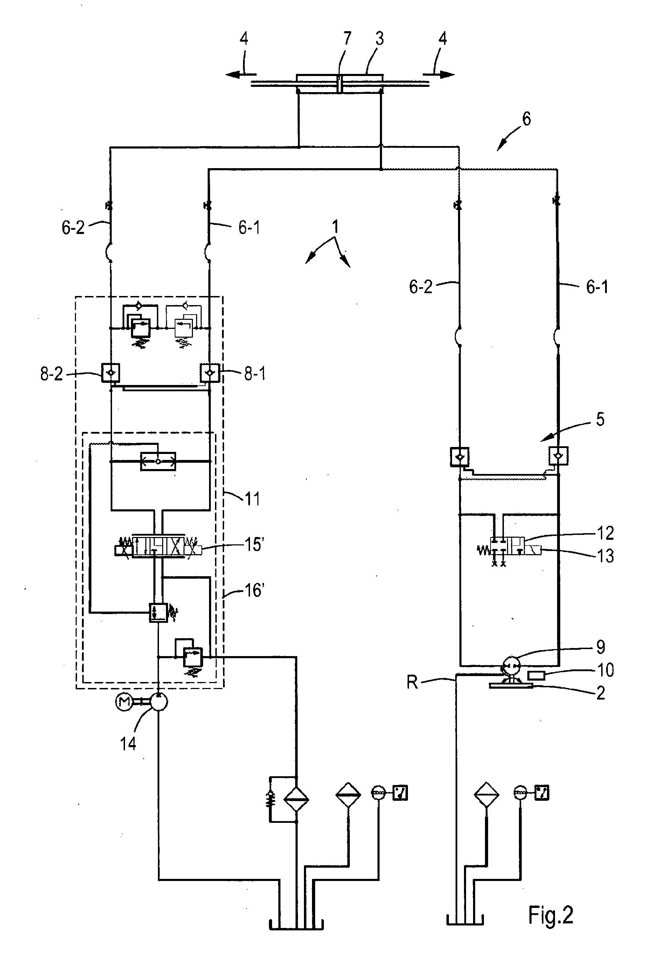

Figures 1 and 2 show circuit diagrams of various embodiments of the steering system 1 for a ship. The steering system 1, which has two branches, comprises a turnable steering wheel 2, a steering element 4 operable by steering means 3, which steering element is formed by of at least one rudder, and an actuator 5 hydraulically coupled to the steering wheel 2, which transmits information from the steering wheel to the steering means 3 by means of hydraulic pressure. In the diagrams shown, said information is embodied by hydraulic difference pressure in hydraulic lines 6-1 and 6-2, which difference pressure is in this case derived from the rotation of the steering wheel 2, by means of a pump 9 such as a helm pump, which is directly or indirectly connected to the steering wheel 2. Said lines, jointly indicated at 6, are connected to the hydraulic steering means, for example in the form of a hydraulic cylinder 3, in which a piston 7, which is connected to the rudder in that case, is movable in two directions under the influence of the difference pressure. In general the, possibly manually turnable, steering wheel 2 can be used for turning a so-called sterndrive, a rudder propeller, a schottel system, an azimuth system or an outboard engine.
In the description below, only the term rudder 4 will be used for the sake of brevity.
Respective controlled non-return valves 8-1, 8-2 are incorporated in the lines 6 for ensuring the separation of the two branches of the system 1 and holding the rudder 4 in position when it is not being controlled. When the steering wheel 2 is turned in one direction, the hand pump 9 connected thereto generates an overpressure in one line 6, causing the rudder 4 to move in one direction, and conversely. Repeated turning of the steering wheel 2 during navigation requires that a constant, considerable force be generated so as to realise the required hydraulic difference pressure in the lines 6 by means of the pump 9. Furthermore, the realisation of an additional control point remote from the fixed position of the steering wheel 2 is quite a job, because in practice this involves the installation, preferably slightly concealed, of heavy and difficult-to-handle hydraulic lines.
The steering system 1 also comprises contactless angular displacement means 10 coupled to the steering wheel 2 for determining the angle-related information of the steering wheel 2, and a parallel actuator 11 connected between said angular displacement means 10 and the control means 3 in the second branch. The system 1 further comprises switching means 12 designed to disconnect the hydraulic connection between, in this case, the steering wheel 2 and the hydraulic pump that is normally connected to the steering wheel 2, when the parallel actuator 11 becomes operational. When the system is switched to the other condition, viz. to the parallel actuator 11 yet to be explained in more detail hereinafter, which switching also involves "disconnecting" the steering wheel 2 from the hydraulic system, in which case the steering wheel 2 runs free from the pump 9, therefore, turning the steering wheel requires very little energy, whilst the necessary angle information or angle-related information is obtained from angular displacement means 10 connected to the steering wheel 2. Examples of usual contactless angular displacement means are electric, magnetic, optic, stroboscopic and/or electromagnetic means. Also a potentiometer may be used. In short, the angular displacement of the steering wheel or the mathematical first derivative thereof is somehow used for accordingly influencing the position of the rudder 4 via the parallel actuator 11. Initially, a signal from the means 10, for example an electrical signal, will be available, from which signal the hydraulic difference pressure in the lines 6-1 and 6-2 will be derived by the parallel actuator 11. The actuator 11 is a programmable actuator so as to advantageously make it possible to set a desired relation between an angular displacement and/or the angular displacement rate of the steering wheel 2 and the extent to which or the speed at which the rudder 4 moves in response thereto. The programmable relation is a linear relation, for example, as suitable in particular for vessels fitted with outboard motors, where generally a fairly direct steering action is required, or, for example, a parabolic relation, which is preferred in the case of displacement vessels, where generally a "reverse" operation is required. In practice it is necessary to ensure for safety reasons that the switching means 12 are further designed to restore the original hydraulic connection to the steering wheel 2 in case of a malfunction in the parallel actuator 11, so that steering can take place in the classic, safe but heavy manner again.
In the elaborated hydraulic diagrams of figures 1 and 2, the hydraulic switching means 12 comprise an electrically operated hydraulic slide valve 13, which, upon moving to the left, seen in the figures, upon being actuated minimizes the pressure in the lines 6. As a result, the steering wheel 2 remains connected to the pump 9, but the pump will not deliver any pressure and turning the steering wheel 2 will require hardly any force any more.
At the driver's command, the switching means 12 in the first branch switch to the parallel actuator 11 in the second branch, which comprises a pump 14 driven by a motor M. The motor M may be an electric motor, a hydraulically, mechanically or pneumatically driven motor or an internal combustion engine. The hydraulic difference pressure in the lines 6 is controlled, in a manner which is known per se, by a control signal R delivered by the angular displacement means 10. Said control signal includes a measure of the extent to which the steering wheel 2 is turned through a particular angle during freewheel.
For this there are several possibilities besides the diagrams shown in figures 1 and 2. The motor M may to that end also be electronically controlled by the control signal R, for example, so as to realise the aforesaid difference pressure.
As the diagram of figure 1 shows, the pressure of the pump 14 is controlled in dependence on the control signal R. Upon activation of the switching means 12, the slide of a valve 15 mounted between the lines 6-1 and 6-2 moves to the left, and the hydraulic medium flows to a valve system 16 controlled by the control signal for effecting the desired positive or negative normalized difference pressure in the lines 6-1 and 6-2.
In figure 2 a next hydraulic variant is shown, in which the difference pressure in the lines 6 is adjusted by a controllable valve system 16', also on the basis of information from the means 10, for steering the rudder 4. The two valve systems 16 and 16' are designed to function as reversing devices so as to make steering of the vessel in both sailing directions possible.
By providing sensors at suitable locations, by means of which sensors a correct operation of the parallel actuator 11 is monitored, or by simply fitting an emergency button, the system can automatically or manually be switched to the original manually driven, safe helm pump 9 steering system 1 in case of a calamity.
One electrical control signal R from the contactless means 10 can be combined with or even be replaced by, if desired, electrical direction signals from an automatic pilot system, so that said signals - also - determine the direction in which the vehicle is moving.
Where possible, use may at least in part be made of electrical, mechanical, pneumatic or electromechanical equivalent (combinations of) parts in those cases in which a hydraulic version has been used in the foregoing.

## Claims

1. A marine steering system (1) for a vessel, comprising:
- a turnable steering wheel (2),
- a steering element (4) operable by steering means embodied as hydraulic steering means (3),
- an actuator (5, 9) hydraulically connected to the steering wheel, which transmits information from the steering wheel (2) to the steering means (3),
- angular displacement means (10) connected to the steering wheel (2) for determining angle-related information,
- a parallel actuator (11) connected between the aforesaid angular displacement means (10) and the steering means (3), and having a hydraulic part for connection to the hydraulic steering means (3) and an electric part, whereby the electrical part of the parallel actuator (11) is connected to the angular displacement means (10) for delivering a control signal (R) which includes a measure of the extent to which the steering wheel (2) is turned through a particular angle during freewheel, and
- switching means (12) designed to disconnect the hydraulic connection to the steering wheel (2) when the parallel actuator (11) becomes operative, and designed to cause the steering wheel (2) to run free from the actuator (5) upon being activated,
**characterised in**
**that** the angular displacement means are contactless angular displacement means (10) connected to the freewheeling steering wheel (2) in a contactless manner, and
**that** the parallel actuator is a programmable actuator (11) making it possible to set a desired programmable relation between the angular displacement and/or the angular displacement ratio of the steering wheel (2) and the extent to which or the speed at which the rudder (4) moves in response thereto.

2. A steering system (1) according to claim 1, **characterised in that** the switching means (12) are further designed to effect the hydraulic connection to the steering wheel (2) in case of a malfunction in the parallel actuator (11).

3. A steering system (1) according to claim 1 or 2, **characterised in that** the steering system (1) comprises at least one reversing device incorporated in at least one of said actuator (5) and said parallel actuator (11) for moving the steering element (4) in the one and the other direction.

4. A steering system (1) according to any one of claims 1-3, **characterised in that** the steering means comprise a hydraulic cylinder (3) connected to the turnable steering wheel (2), and **in that** the, possibly manually turnable, steering wheel (2) comprises the rudder of a vessel and/or a sterndrive, a rudder propeller, a schottel, an azimuth system or an outboard engine.

5. A steering system (1) according to claim 4, **characterised in that** the actuator (5, 9) comprises a hydraulic hand pump (9), which is driven by turning the steering wheel (2).

6. A steering system (1) according to claim 5, **characterised in that** said hand pump is a helm pump (9).

7. A steering system (1) according to claim 5 or 6, **characterised in that** the switching means (12) are designed to hydraulically short-circuit the hand pump (9) upon being activated.

8. A steering system (1) according to any one of claims 1-7, **characterised in that** the contactless, angular displacement means (10) comprise electrically, magnetically, optically, stroboscopically and/or electromagnetically operated means.

9. A steering system (1) according to any one of claims 1-8, **characterised in that** the programmable relation is e.g. a linear relation or a parabolic relation.

## Patentansprüche

1. Schiffssteuersystem (1) für ein Wasserfahrzeug, wobei das System Folgendes umfasst:
- ein drehbares Steuerrad (2),
- ein Steuerelement (4), das durch Steuerungsmittel betätigt werden kann, die als hydraulische Steuerungsmittel (3) ausgeführt sind,
- einen Stellantrieb (5, 9), hydraulisch mit dem Steuerrad verbunden, der Informationen von dem Steuerrad (2) zu den Steuerungsmitteln (3) übermittelt,
- Winkelverschiebungsmittel (10), die mit dem Steuerrad (2) verbunden sind, um winkelbezogene Informationen zu bestimmen,
- einen parallelen Stellantrieb (11), der zwischen die zuvor erwähnten Winkelverschiebungsmittel (10) und die Steuerungsmittel (3) geschaltet ist und einen hydraulischen Teil zur Verbindung mit den Steuerungsmitteln (3) und einen elektrischen Teil hat, wobei der elektrische Teil des parallelen Stellantriebs (11) mit den Winkelverschiebungsmitteln (10) verbunden ist, um ein Steuersignal (R) zu liefern, das ein Maß des Ausmaßes einschließt, bis zu dem das Steuerrad (2) während des Freilaufs durch einen bestimmten Winkel gedreht wird, und
- Schaltmittel (12), die dafür ausgelegt sind, die hydraulische Verbindung zu dem Steuerrad (2) zu unterbrechen, wenn der parallele Stellantrieb (11) tätig wird, und dafür ausgelegt sind, zu veranlassen, dass das Steuerrad (2) frei von dem Stellantrieb (5) läuft, nachdem sie aktiviert sind,
**dadurch gekennzeichnet,**
**dass** die Winkelverschiebungsmittel berührungslose Winkelverschiebungsmittel (10) sind, die auf eine berührungslose Weise mit dem freilaufenden Steuerrad (2) verbunden sind, und
**dass** der parallele Stellantrieb ein programmierbarer Stellantrieb (11) ist, der es möglich macht, eine gewünschte programmierbare Beziehung zwischen der Winkelverschiebung und/oder dem Winkelverschiebungsverhältnis des Steuerrades (2) und dem Ausmaß, bis zu dem, oder der Geschwindigkeit, mit der sich das Ruder (4) als Reaktion darauf bewegt, festzusetzen.

2. Steuersystem (1) nach Anspruch 1, **dadurch gekennzeichnet, dass** die Schaltmittel (12) ferner dafür ausgelegt sind, im Fall einer Störung in dem parallelen Stellantrieb (11) die hydraulische Verbindung zu dem Steuerrad (2) zu bewirken.

3. Steuersystem (1) nach Anspruch 1 oder 2, **dadurch gekennzeichnet, dass** das Steuersystem (1) wenigstens eine Umkehreinrichtung umfasst, die in wenigstens einem von dem Stellantrieb (5) und dem parallelen Stellantrieb (11) eingeschlossen ist, um das Steuerelement (4) in der einen und der anderen Richtung zu bewegen.

4. Steuersystem (1) nach einem der Ansprüche 1 bis 3, **dadurch gekennzeichnet, dass** die Steuerungsmittel einen Hydraulikzylinder (3) umfassen, der mit dem drehbaren Steuerrad (2) verbunden ist, und dadurch, dass das, möglicherweise manuell drehbare, Steuerrad (2) das Ruder eines Wasserfahrzeugs und/oder einen Heckantrieb, einen Ruderpropeller, einen Schottelantrieb, ein Azimutsystem oder einen Außenbordmotor umfasst.

5. Steuersystem (1) nach Anspruch 4, **dadurch gekennzeichnet, dass** der Stellantrieb (5, 9) eine hydraulische Handpumpe (9) umfasst, die durch das Drehen des Steuerrades (2) angetrieben wird.

6. Steuersystem (1) nach Anspruch 5, **dadurch gekennzeichnet, dass** die Handpumpe eine Helmpumpe (9) ist.

7. Steuersystem (1) nach Anspruch 5 oder 6, **dadurch gekennzeichnet, dass** die Schaltmittel (12) ferner dafür ausgelegt sind, die Handpumpe (9) kurzzuschließen, nachdem sie aktiviert sind.

8. Steuersystem (1) nach einem der Ansprüche 1 bis 7, **dadurch gekennzeichnet, dass** die berührungslosen Winkelverschiebungsmittel (10) elektrisch, magnetisch, optisch, stroboskopisch und/oder elektromagnetisch betriebene Mittel umfassen.

9. Steuersystem (1) nach einem der Ansprüche 1 bis 8, **dadurch gekennzeichnet, dass** die programmierbare Beziehung z.B. eine lineare Beziehung oder eine parabolische Beziehung ist.

## Revendications

1. Système de direction naval (1) pour un navire, comprenant:
- une roue de direction rotative (2),
- un élément de direction (4) pouvant être actionné par un moyen de direction incarné en tant que moyen de direction hydraulique (3),
- un actionneur (5, 9) relié hydrauliquement à la roue de direction qui transmet des informations de la roue de direction (2) au moyen de direction (3),
- un moyen de déplacement angulaire (10) relié à la roue de direction (2) pour déterminer des informations relatives à l'angle,
- un actionneur parallèle (11) connecté entre le moyen de déplacement angulaire (10) mentionné plus haut et le moyen de direction (3), et présentant une pièce hydraulique pour la connexion au moyen de direction hydraulique (3) et une pièce électrique, sachant que la pièce électrique de l'actionneur parallèle (11) est connectée au moyen de déplacement angulaire (10) pour fournir un signal de commande (R) qui inclut une mesure du degré dans lequel la roue de direction (2) est tournée à travers un angle précis pendant la roue libre, et
- un moyen de commutation (12) conçu pour déconnecter la connexion hydraulique à la roue de direction (2) lorsque l'actionneur parallèle (11) se met à fonctionner, et conçu pour faire tourner la roue de direction (2) librement de l'actionneur (5) lorsqu'il est activé,
**caractérisé en ce que**
le moyen de déplacement angulaire est un moyen de déplacement angulaire sans contact (10) connecté à la roue de direction (2) tournant en roue libre d'une façon sans contact, et
que l'actionneur parallèle est un actionneur programmable (11) permettant de régler une relation programmable souhaitée entre le déplacement angulaire et/ou le rapport de déplacement angulaire de la roue de direction (2) et le degré auquel ou la vitesse à laquelle le gouvernail (4) se déplace en réponse à cela.

2. Système de direction (1) selon la revendication 1, **caractérisé en ce que** le moyen de commutation (12) est en outre conçu pour effectuer la connexion hydraulique à la roue de direction (2) en cas de dysfonctionnement dans l'actionneur parallèle (11).

3. Système de direction (1) selon la revendication 1 ou 2, **caractérisé en ce que** le système de direction (1) comprend au moins un dispositif de va-et-vient incorporé dans au moins un de l'actionneur (5) et de l'actionneur parallèle (11) pour déplacer l'élément de direction (4) dans l'une ou l'autre direction.

4. Système de direction (1) selon l'une quelconque des revendications 1 à 3, **caractérisé en ce que** le moyen de direction comprend un cylindre hydraulique (3) connecté à la roue de direction (2) rotative, et **en ce que**, pouvant être tournée manuellement, la roue de direction (2) comprend le gouvernail d'un navire et ou d'un moteur semi-hors-bord, d'une hélice de gouvernail, d'un schottel, d'un système d'azimuth ou d'un moteur hors-bord.

5. Système de direction (1) selon la revendication 4, **caractérisé en ce que** l'actionneur (5, 9) comprend une pompe manuelle hydraulique (9) qui est entraînée en tournant la roue de direction (2).

6. Système de direction (1) selon la revendication 5, **caractérisé en ce que** la pompe manuelle est une pompe de barre (9).

7. Système de direction (1) selon la revendication 5 ou 6, **caractérisé en ce que** le moyen de commutation (12) est conçu pour court-circuiter la pompe manuelle (9) hydrauliquement lorsqu'il est actionné.

8. Système de direction (1) selon l'une quelconque des revendications 1 à 7, **caractérisé en ce que** le moyen de déplacement angulaire sans contact (10) comprend un moyen actionné de façon électrique, magnétique, optique, stroboscopique et/ou électromagnétique.

9. Système de direction (1) selon l'une quelconque des revendications 1 - 8, **caractérisé en ce que** la relation programmable est par exemple une relation linéaire ou une relation parabolique.
